# FASCICULE DE BREVET EUROPEEN

(11) **EP 2 808 202 B1**
(45) Date de publication et mention de la délivrance du brevet: **08.03.2017**
(21) Numéro de dépôt: 14169904.1
(22) Date de dépôt: 26.05.2014
(51) Int. Cl.: B60R 13/08

(54) **Ecran de protection acoustique pour un moteur de véhicule automobile**
Akustischer Schutzschirm für einen Kraftfahrzeugmotor
Acoustic shield for a motor vehicle engine

(30) Priorité: 28.05.2013 FR 1354827
(43) Date de publication de la demande: 03.12.2014
(73) Titulaire: CENTRE D'ETUDE ET DE RECHERCHE POUR L'AUTOMOBILE (CERA), 51100 Reims (FR)
(72) Inventeur: Brillon, Eric, 51390 Rosnay (FR); Capron, Christophe, 51490 Epoye (FR); Waxin, Laurent, 02130 Dravegny (FR)
(74) Mandataire: Sayettat, Julien Christian

(56) Documents cités:
- EP-A1- 0 693 362
- EP-A1- 1 671 847
- EP-A1- 2 103 507
- EP-A1- 2 574 506
- EP-A1- 2 628 643
- EP-A2- 1 648 676
- EP-A2- 2 053 593
- WO-A1-03/021096
- FR-A1- 2 906 844
- FR-A1- 2 923 889
- JP-A- 2002 129 974

## Description

L'invention concerne un écran de protection acoustique pour un moteur de véhicule automobile et un procédé de réalisation d'un tel écran.

Il est connu de réaliser un écran de protection acoustique pour un moteur de véhicule automobile, ledit écran étant à base de mousse de polyuréthanne.

Un écran selon le préambule de la revendication 1 est connu du document EP 2 628 643 A1. de mousse de polyuréthanne permet d'assurer une protection acoustique par isolation, dans le cas d'une mousse non poreuse, ou par absorption, dans le cas d'une mousse poreuse.

En réalité, les deux phénomènes peuvent se combiner, la mousse pouvant présenter une porosité de surface mais l'écran se comportant toutefois comme un élément étanche.

De façon pratique, on peut approximativement considérer que la mousse est d'autant moins poreuse que sa masse volumique augmente.

Du fait de la chaleur dégagée par le moteur, il est nécessaire de disposer d'une mousse pouvant résister jusqu'à des températures de l'ordre de 200°C.

En pratique, les mousses résistant à de telles températures sont des mousses de forte masse volumique, ce qui est préjudiciable au poids du véhicule, et dont le coût de formulation est élevé (« mousses techniques »).

Et, bien souvent, une telle tenue en température n'est requise que de façon localisée sur l'écran.

C'est pourquoi, il a été prévu dans certaines réalisations de prévoir une protection thermique localisée en surface sous forme de patch en aluminium.

Un tel agencement permet l'utilisation de mousses de qualité moindre, résistant par exemple à des températures de l'ordre de 150-170 °C, ce qui permet de gagner en poids et en coût.

Cependant, la fixation d'un patch en aluminium requiert que ce dernier soit fixé à la mousse par des pièces de fixation telles que des rivets, l'option d'un surmoulage de l'aluminium par la mousse pouvant s'avérer d'une tenue mécanique insuffisante.

L'utilisation de telles pièces de fixation complexifie la réalisation de l'écran et entraîne des surcoûts de fabrication.

L'invention a pour but de pallier ces inconvénients.

A cet effet, l'invention selon la revendication 1 propose un écran de protection acoustique pour un moteur de véhicule automobile, ledit écran étant à base de mousse de polyuréthanne, ledit écran étant pourvu en surface d'au moins un patch de protection thermique, ledit écran présentant les caractéristiques suivantes :
- ledit patch est à base de feutre de fibres liées entre elles par une résine,
- ledit patch est surmoulé par ladite mousse.

Par « feutre », on entend un matériau poreux, c'est à dire présentant des espaces vides susceptibles d'être pénétrés par la mousse.

Par « patch », on entend un élément de moindre surface que celle de la couche de mousse, ceci dans la mesure où l'on cherche à apporter une protection thermique localisée.

Avec l'agencement proposé, on dispose d'une protection thermique dont l'efficacité est dictée par le choix des fibres et de la résine, un feutre de fibres minérales liées entre elles par une résine thermodurcissable étant particulièrement adapté à un tel usage.

En outre, on s'affranchit de l'utilisation de pièces de fixation du patch, ce dernier étant fixé à la mousse par surmoulage.

Avec l'agencement proposé, on a pénétration partielle de la mousse dans l'épaisseur du feutre, ce qui assure une fixation d'une grande robustesse.

Selon un deuxième aspect, l'invention propose un procédé de réalisation d'un tel écran.

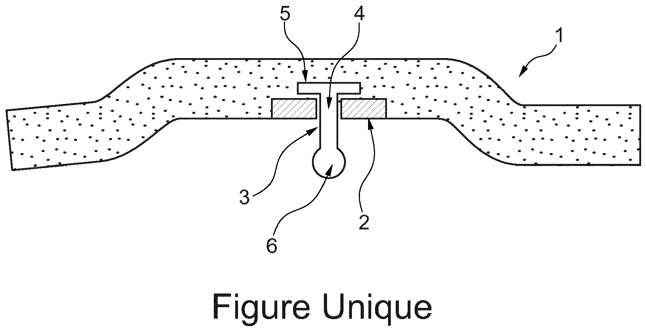

D'autres particularités et avantages de l'invention apparaîtront dans la description qui suit, faite en référence à la figure jointe qui est une vue schématique partielle et en coupe d'un écran selon une réalisation.

En référence à la figure, on décrit un écran 1 de protection acoustique pour un moteur de véhicule automobile - ledit écran étant notamment destiné à être monté au-dessus dudit moteur -, ledit écran étant pourvu en surface d'au moins un patch 2 de protection thermique - ledit patch étant destiné à être disposé en regard d'une zone du moteur de chaleur accentuée -, ledit écran présentant les caractéristiques suivantes :
- ledit patch est à base de feutre de fibres liées entre elles par une résine,
- ledit patch est surmoulé par ladite mousse.

En particulier, le feutre est à base de fibres minérales (verre, roche,..), synthétiques (polyester,...), naturelles (coton, lin,...) ou métalliques.

La résine peut, quant à elle, être notamment une résine thermodurcissable (phénolique,...) ou thermoplastique (polyester,..).

Selon une réalisation, la masse volumique de la mousse est comprise entre 80 et 400 g/L.

Selon une réalisation, le patch 2 présente une épaisseur comprise entre 3 et 8 mm.

Selon une réalisation, le patch 2 présente une masse surfacique comprise entre 300 et 1000 g/m².

Selon la réalisation représentée, l'écran 1 comprend au moins un organe de fixation 3 s'étendant de part et d'autre d'une ouverture 4 - par exemple sous forme de fente ou d'orifice - prévue dans le patch 2, ledit organe présentant une partie d'ancrage 5 surmoulée par la mousse et une partie d'accrochage 6 sur un élément environnant ledit écran, par exemple le moteur.

Le fait de mettre l'organe de fixation 3 au niveau d'un patch 2 permet d'en assurer un ancrage dans la mousse beaucoup plus robuste que dans une zone qui serait dépourvue de patch 2.

En outre, une telle réalisation permet d'éviter toute fuite de mousse qui viendrait enrober la partie d'ancrage, ceci de par l'étanchéité à la mousse réalisée par le feutre au niveau de l'ouverture 4.

On décrit à présent un procédé de réalisation d'un écran 1, ledit procédé comprenant les étapes suivantes :
- prévoir un patch 2 de feutre,
- disposer ledit patch contre la paroi d'un moule définissant le volume de l'écran 1 à obtenir,
- injecter dans ledit moule un mélange précurseur de mousse de polyuréthanne,
- après expansion et polymérisation de la mousse, démouler l'écran 1 obtenu.

Selon une réalisation, le procédé peut comprendre en outre les étapes suivantes :
- avant mise en place du patch 2 dans le moule, pratiquer au moins une ouverture 4 dans ledit patch,
- introduire dans ladite ouverture un organe de fixation 3 présentant une partie d'ancrage 5 et une partie d'accrochage 6 saillant de part et d'autre de ladite ouverture,
- lors de la mise en place dudit patch dans le moule, disposer ladite partie d'ancrage tournée vers l'intérieur dudit moule de façon à permettre son surmoulage par la mousse.

## Revendications

1. Ecran (1) de protection acoustique pour un moteur de véhicule automobile, ledit écran étant à base de mousse de polyuréthanne, ledit écran étant **caractérisé en ce qu'**il est pourvu en surface d'au moins un patch (2) de protection thermique de moindre surface que celle de la couche de mousse,
. ledit patch étant à base de feutre de fibres minérales liées entre elles par une résine thermodurcissable, et
. ledit patch étant surmoulé par ladite mousse.

2. Ecran selon la revendication 1, **caractérisé en ce que** la masse volumique de la mousse est comprise entre 80 et 400 g/L.

3. Ecran selon l'une des revendications 1 ou 2, **caractérisé en ce que** le patch (2) présente une épaisseur comprise entre 3 et 8 mm.

4. Ecran selon l'une quelconque des revendications 1 à 3, **caractérisé en ce que** le patch (2) présente une masse surfacique comprise entre 300 et 1000 g/m².

5. Ecran selon l'une quelconque des revendications 1 à 4, **caractérisé en ce qu'**il comprend au moins un organe de fixation (3) s'étendant de part et d'autre d'une ouverture (4) prévue dans le patch, ledit organe présentant une partie d'ancrage (5) surmoulée par la mousse et une partie d'accrochage (6) sur un élément environnant ledit écran.

6. Procédé de réalisation d'un écran selon l'une quelconque des revendications 1 à 5, ledit procédé comprenant les étapes suivantes :
. prévoir un patch (2) de feutre,
. disposer ledit patch contre la paroi d'un moule définissant le volume de l'écran à obtenir,
• injecter dans ledit moule un mélange précurseur de mousse de polyuréthanne,
• après expansion et polymérisation de la mousse, démouler l'écran (1) obtenu.

7. Procédé selon la revendication 6, lorsqu'elle dépend de la revendication 5, **caractérisé en ce qu'**il comprend en outre les étapes suivantes :
• avant mise en place du patch (2) dans le moule, pratiquer au moins une ouverture (4) dans ledit patch,
• introduire dans ladite ouverture un organe de fixation (3) présentant une partie d'ancrage (5) et une partie d'accrochage (6) saillant de part et d'autre de ladite ouverture,
• lors de la mise en place dudit patch dans le moule, disposer ladite partie d'ancrage tournée vers l'intérieur dudit moule de façon à permettre son surmoulage par la mousse.

## Patentansprüche

1. Schirm (1) zum Schallschutz eines Kraftfahrzeugmotors, wobei der Schirm auf einem Polyurethanschaum basiert, wobei der Schirm **dadurch gekennzeichnet ist, dass** er auf der Oberfläche mit mindestens einem Flicken (2) zum thermischen Schutz mit einer geringeren Fläche als derjenigen der Schaumschicht versehen ist,
- wobei der Flicken auf einem Filz aus Mineralfasern basiert, die untereinander durch ein wärmehärtbares Harz verbunden sind, und
- wobei der Flicken durch den Schaum überformt ist.

2. Schirm nach Anspruch 1, **dadurch gekennzeichnet, dass** die Dichte des Schaums zwischen 80 und 400 g/l liegt.

3. Schirm nach einem der Ansprüche 1 oder 2, **dadurch gekennzeichnet, dass** der Flicken (2) eine Dicke zwischen 3 und 8 mm aufweist.

4. Schirm nach einem der Ansprüche 1 bis 3, **dadurch gekennzeichnet, dass** der Flicken (2) ein Flächengewicht zwischen 300 und 1000 g/m² aufweist.

5. Schirm nach einem der Ansprüche 1 bis 4, **dadurch gekennzeichnet, dass** er mindestens ein Fixierungsorgan (3) umfasst, das sich auf beiden Seiten einer Öffnung (4) erstreckt, die im Flicken bereitgestellt ist, wobei das Organ einen Verankerungsteil (5) aufweist, der durch den Schaum überformt ist, und einen Befestigungsteil (6) auf einem Element, das den Schirm umgibt.

6. Verfahren zur Herstellung eines Schirms nach einem der Ansprüche 1 bis 5, wobei das Verfahren die folgenden Schritte umfasst:
- Bereitstellen eines Flickens (2) aus Filz,
- Anordnen des Flickens gegen die Wand einer Form, die das Volumen des zu erhaltenden Schirms definiert,
- Injizieren einer Vorläufermischung aus Polyurethanschaum in die Form,
- nach der Expansion und Polymerisierung des Schaums Entfernen des erhaltenen Schirms (1) aus der Form.

7. Verfahren nach Anspruch 6, wenn er von Anspruch 5 abhängt, **dadurch gekennzeichnet, dass** es außerdem die folgenden Schritte umfasst:
- vor dem Anbringen des Flickens (2) in der Form, Durchführen von mindestens einer Öffnung (4) in dem Flicken,
- Einführen in die Öffnung eines Fixierungsorgans (3), das einen Verankerungsteil (5) und einen Befestigungsteil (6) aufweist, der auf beiden Seiten von der Öffnung hervorspringt,
- bei der Anbringung des Flickens (2) in der Form, Anordnen des Verankerungsteils, der gegen das Innere der Form gedreht ist, derart, dass seine Überformung durch den Schaum ermöglicht wird.

## Claims

1. Acoustic protective shield (1) for a motor vehicle engine, said shield having a polyurethane foam base, said shield being **characterised in that** it is provided on the surface with at least one thermal protective patch (2) having a smaller surface area than the foam layer
- said patch being based on a felt made of mineral fibres which are bonded together by a thermosetting resin and
- said patch being overmoulded by said foam

2. Shield according to claim 1, **characterised in that** the volume mass of the foam is between 80 and 400 g/L.

3. Shield according to any of claims 1 or 2, **characterised in that** the patch (2) has a thickness of between 3 and 8 mm.

4. Shield according to any of claims 1 to 3, **characterised in that** the patch (2) has a mass per unit area of between 300 and 1000 g/m².

5. Shield according to any of claims 1 to 4, **characterised in that** it comprises at least one fixing element (3) extending on either side of an opening (4) provided in the patch, said element having an anchoring part (5) overmoulded by the foam and a fastening part (6) on an element surrounding said shield.

6. Method for forming a shield according to any of claims 1 to 5, said method comprising the following steps:
- providing a patch (2) of felt,
- arranging said patch against the wall of a mould defining the volume of the shield to be obtained,
- injecting into said mould a precursor mixture of polyurethane foam,
- after the expansion and polymerisation of the foam, removing the shield (1) obtained from the mould.

7. Method according to claim 6, when it is dependent on claim 5, **characterised in that** it also comprises the following steps:
- before placing the patch (2) in the mould, forming at least one opening (4) in said patch,
- introducing into said opening a fixing element (3) having an anchoring part (5) and a fastening part (6) projecting on either side of said opening,
- when placing said patch in the mould, arranging said anchoring part turned towards the inside of said mould so as to enable it to be overmoulded by the foam.
